# NEUE EUROPÄISCHE PATENTSCHRIFT

(11) **EP 3 231 585 B2**
(45) Veröffentlichungstag und Bekanntmachung des Hinweises auf die Entscheidung über den Einspruch: **15.04.2026**
(45) Hinweis auf die Patenterteilung: 14.10.2020
(21) Anmeldenummer: 17000493.1
(22) Anmeldetag: 24.03.2017
(51) Int. Cl.: B29C 65/08, B29L 7/00

(54) **VORRICHTUNG ZUM ULTRASCHALLSCHWEISSEN**
DEVICE FOR ULTRASONIC WELDING
DISPOSITIF DE SOUDAGE PAR ULTRASONS

(30) Priorität: 11.04.2016 DE 102016004180
(43) Veröffentlichungstag der Anmeldung: 18.10.2017
(73) Patentinhaber: Focke & Co. (GmbH & Co. KG), 27283 Verden (DE)
(72) Erfinder: Leifheit, Axel, 27336 Häuslingen (DE); Storcks, Andreas, 21271 Asendorf (DE); Schnakenberg, Jan, 27337 Blender (DE)
(74) Vertreter: Aulich, Martin

(56) Entgegenhaltungen:
- EP-A2- 1 849 569
- WO-A1-2006/074105
- JP-A- 2013 063 521
- US-A1- 2015 068 660

## Beschreibung

Die vorliegende Erfindung betrifft eine Vorrichtung zum Ultraschallschweißen von Materialien, insbesondere Folien, mit einer eine Ultraschallsonotrode aufweisenden Ultraschallschweißeinheit.

Es ist bekannt, Materialien mittels einer Ultraschallschweißeinheit miteinander zu verbinden. Die erforderliche Energie wird dabei durch Ultraschall in die Materialien eingebracht. Die Materialien sind während des Schweißvorgangs zwischen der Ultraschallsonotrode und einem Gegenwerkzeug, wie etwa einem Amboss angeordnet.

Insbesondere bei dem Verschweißen von Folien besteht ein Problem darin, dass die Folien während des Schweißvorgangs durch einen Plastifizierungsvorgang im Schweißbereich dünner werden bzw. nachgeben. Dies hat unter anderem zur Folge, dass der Schweißdruck, den die Ultraschallsonotrode aufbringt, nicht mehr optimal ist.

Die DE 10 2011 006 932 B4 schlägt vor, das Gegenwerkzeug mittels eines Linearmotors gegebenenfalls nachzuführen und so den Anpressdruck bei Bedarf zu erhöhen. Nachteilig hierbei ist neben dem komplizierten Aufbau der in der DE 10 2011 006 932 B4 offenbarten Vorrichtung die hieraus resultierende Notwendigkeit, materialabhängig verschiedene Steuerungskurven für die Nachführbewegung des Linearmotors zu hinterlegen bzw. bei einem Wechsel der zu verschweißenden Materialien zunächst aufwendig neue Steuerkurven entwickeln zu müssen.

Die JP 2013 063521 A zeigt eine Einrichtung zum Ultraschallschweißen, bei der das Ultraschallschweißorgan mittels einer Schraubenfeder in Richtung der zu schweißenden Materialien vorgespannt wird.

Die US 2015/068660 A1 zeigt ein Ultraschallschweißsystem, bei dem das Ultraschallschweißorgan mittels eines Aktuators feingesteuert wird.

Die EP 1 849 569 A2 zeigt eine Vorrichtung zum Ultraschallschweißen von Materialien mit einer eine Ultraschallsonotrode aufweisenden Ultraschallschweißeinheit, mit einem elektrischen Antriebsmotor zum Verfahren der Ultraschallschweißeinheit unabhängig von der Ultraschallschweißbewegung der Ultraschallsonotrode in Richtung eines Gegenorgans, zwischen dem und der Ultraschallsonotrode die zu verschweißenden Materialien während des Schweißvorgangs angeordnet sind, und mit einem in einer Schweißstellung der Ultraschallschweißeinheit gegenüber einer Nicht-Schweißstellung gegen den Widerstand von entgegengerichteten Spannkräften in seiner Länge verringerten, pneumatischen Spannorgan, das sich in der Schweißstellung bei einem Nachgeben wenigstens eines der zu verschweißenden Materialien während des Schweißvorgangs aufgrund seiner Spannkräfte in seiner Länge vergrößert und durch die Längenvergrößerung eine Bewegung des Gegenorgans in Richtung der Ultraschallsonotrode bewirkt. Aus der US 5 575 844 A geht eine Vorrichtung zum hygienischen Ultraschallschweißen von heißsiegelbaren Oberflächen hervor, bei der eine Ultraschallschweißeinheit und eine Ambosseinheit aufeinander zu bewegt werden um eine dazwischen positionierte Verpackung, z.B. einen Karton, zu versiegeln. Zwischen der Ultraschallschweißeinheit und/oder der Ambosseinheit kann ein Vorspannelement vorgesehen sein, welches verhindert, dass der auf die Verpackung ausgeübte Siegeldruck einen vorbestimmten Maximalwert überschreitet.

Ausgehend hiervon ist es Aufgabe der vorliegenden Erfindung, eine Vorrichtung zum Ultraschallschweißen der eingangs genannten Art weiterzuentwickeln.

Diese Aufgabe wird gelöst durch eine Vorrichtung mit den Merkmalen des Anspruchs 1 und eine Vorrichtung mit den Merkmalen des Anspruchs 2.

Die erste Alternative einer erfindungsgemäßen Vorrichtung zum Ultraschallschweißen von Materialien gemäß Anspruch 1 verfügt über einen elektrischen Antriebsmotor, bevorzugt einen Servomotor, zum Verfahren der Ultraschallschweißeinheit unabhängig von der Ultraschallschweißbewegung der Ultraschallsonotrode, sowie über ein pneumatisch betriebenes, in besonderer Weise ausgebildetes und mit den anderen Bauteilen der Vorrichtung zusammenwirkendes Spannorgan. Das Spannorgan weist in einer Schweißstellung der Ultraschallschweißeinheit mindestens zu Beginn des Schweißvorgangs eine geringere Länge auf als in einer Nicht-Schweißstellung. Die Überführung des Spannorgans von dem Zustand größerer Länge in den Zustand kleinerer Länge erfolgt dabei gegen den Widerstand von entgegengerichteten Spannkräften des Spannorgans durch Kompression derselben. In der Schweißstellung vergrößert sich die Länge des Spannorgans bei einem Nachgeben wenigstens eines der zu verschweißenden Materialien aufgrund seiner Spannkräfte, beispielsweise bei einer entsprechenden Reduktion seiner Dicke. Durch die Längenvergrößerung wird eine Bewegung der Ultraschallschweißeinheit in Richtung des nachgebenden Materials bewirkt, sodass auch im Falle des Materialnachgebens ein ausreichender Kontakt zwischen Sonotrode und Material(-ien) besteht bzw. ein ausreichender Schweißdruck erzeugt wird.

Bevorzugt ist dabei das Spannorgan Teil der mit dem Antriebsmotor verfahrbaren Ultraschallschweißeinheit.

Die zweite Alternative der erfindungsgemäßen Vorrichtung gemäß Anspruch 2 unterscheidet sich von der ersten Alternative insbesondere insofern, als dass die Längenvergrößerung des Spannorgans in der Schweißstellung bei Nachgeben des mindestens einen Materials nicht zu einer Bewegung der Ultraschallschweißeinheit in Richtung des nachgebenden Materials führt, sondern zu einer entsprechenden Bewegung des Gegenorgans, zwischen dem und der Ultraschallsonotrode die zu verschweißenden Materialien während des Schweißvorgangs angeordnet sind, sodass auch hier im Falle des Materialnachgebens ein guter Kontakt zwischen Sonotrode und Material(-ien) besteht bzw. ein ausreichender Schweißdruck erzeugt wird.

Beide Alternativen weisen entsprechend gegenüber dem Stand der Technik unter anderem den Vorteil auf, dass für eine Aufrechterhaltung ausreichenden Schweißdrucks bei Nachgeben der zu verschweißenden Materialien keine aufwendige Bewegungssteuerung eines Linearmotors notwendig ist, der für eine entsprechende Nachführung des Gegenorgans sorgen müsste.

Bevorzugt ist vorgesehen, dass das Spannorgan gerade bei Verfahren der Ultraschallschweißeinheit von der Nicht-Schweißstellung in die Schweißstellung durch die Gegenkraft des Gegenorgans, zwischen dem und der Ultraschallsonotrode die zu verschweißenden Materialien während des Schweißvorgangs angeordnet sind, von dem oben erwähnten Zustand, in dem es die größere Länge aufweist, in den Zustand überführt bzw. komprimiert wird, in dem es die kleinere Länge aufweist.

Was das Spannorgan betrifft, so weist es vorzugsweise einen ersten Bereich oder ein erstes Bauteil auf sowie einen zweiten Bereich oder ein zweites Bauteil, die zur Längenänderung insbesondere in Längsrichtung der Vorrichtung relativ zueinander bewegbar sind.

In der ersten erfindungsgemäßen Alternative gemäß Anspruch 1 kann dabei das erste Bauteil oder der erste Bereich mittelbar oder unmittelbar (fest) mit dem Antriebsmotor verbunden sein, und das zweite Bauteil oder der zweite Bereich mittelbar oder unmittelbar (fest) mit der Ultraschallsonotrode.

Für beide Alternativen gilt allerdings vorzugsweise, dass der erste Bereich oder das erste Bauteil in dem Zustand des Spannorgans, in dem es eine größere Länge aufweist, einen größeren Abstand von dem zweiten Bereich oder dem zweiten Bauteil aufweist als in dem Zustand, in dem es eine kleinere Länge aufweist.

Erfindungsgemäß weist das Spannorgan als zweites Bauteil ein (insbesondere zylindrisches) Gehäuse auf und als erstes Bauteil ein innerhalb des Gehäuses relativ zu diesem durch Druckluft bewegbares Hubelement.

Als Spannorgan kann beispielsweise ein in der Technik bekanntes Pneumatikspannmodul verwendet werden, bei dem eine innerhalb eines Gehäuses mittels Druckluft bewegbare Membran mit einem von der Membran bewegbaren Hubelement bzw. Stempel zusammenwirkt. In gleicher Weise können auch Pneumatikzylinder mit einem bewegbaren, in einem Gehäuse als Kolben ausgebildeten Hubelement eingesetzt werden.

Unabhängig von der konkreten Ausbildung desselben kann das Spannorgan bei der zweiten Alternative der erfindungsgemäßen Vorrichtung derart betrieben werden und ist vorzugsweise auch bei der ersten Alternative derart ausgebildet oder kann derart betrieben werden, dass die Spannkraft pro Wegstrecke, die das Spannorgan in der Schweißstellung einer Verringerung seiner Länge entgegensetzt oder - abstrakt betrachtet - entgegensetzen würde, vor der Vergrößerung seiner Länge bei Nachgeben des Materials dieselbe oder im Wesentlichen dieselbe ist wie nach der Vergrößerung seiner Länge.

Erfindungsgemäß ist das pneumatisch betriebene Spannorgan an eine Druckluftquelle angeschlossen. Dabei ist die Druckluftquelle derart gesteuert oder geregelt, dass in der Schweißstellung der Ultraschallschweißeinheit der auf das Hubelement wirkende Luftdruck vor dem Nachgeben des Materials und nach dem Nachgeben des Materials gleich oder im Wesentlichen gleich ist.

In weiterer Ausbildung der Erfindung weist die Schweißvorrichtung eine von dem Antriebsmotor angetriebene, mit der Ultraschallschweißeinheit verbundene Kurbelwelle auf, die Drehbewegungen in Translationsbewegungen zum Verfahren der Ultraschallschweißeinheit in die Schweißstellung bzw. aus der Schweißstellung in die Nicht-Schweißstellung übersetzt.

Die Ultraschallschweißeinheit ist bevorzugt während ihrer Verfahrbewegung in Längsrichtung der Vorrichtung geführt, insbesondere durch ein oder mehrere (Längs-)Führungen.

Bevorzugt ist das Spannorgan zusammen mit der Ultraschallsonotrode und einem Ultraschallkonverter an einem Schlitten der Ultraschallschweißeinheit angeordnet, der beim Verfahren der Ultraschallschweißeinheit gemeinsam mit den vorgenannten Bauteilen von der Nicht-Schweißstellung in die Schweißstellung bewegt wird.

Der von dem Gehäuse entfernte Endbereich des Hubelements kann zweckmäßigerweise mittelbar oder unmittelbar mit einem mit der Kurbellwelle zugeordneten Pleuel verbunden sein.

Weitere Merkmale der vorliegenden Erfindung ergeben sich aus den beigefügten Patentansprüchen, der nachfolgenden Beschreibung bevorzugter Ausführungsbeispiele sowie den beigefügten Zeichnungen. Darin zeigt:
- Fig. 1: als Beispiel für eine konkrete Verwendung einer erfindungsgemäßen Schweißvorrichtung zum Ultraschallschweißen das Aufbringen von Schweißnähten auf eine Folienbahn im Rahmen der Herstellung von Beuteln für Tabak,
- Fig. 2: eine Vorderansicht einer ersten Alternative einer erfindungsgemäßen Schweißvorrichtung,
- Fig. 3: die Vorderansicht aus Fig. 2, teilweise geschnitten,
- Fig. 4: eine Schnittdarstellung entlang der Schnittstelle IV-IV aus Fig. 3 in einer Nicht-Schweißstellung der Schweißvorrichtung,
- Fig. 5: eine Darstellung analog Fig. 4 in einer Schweißstellung der Schweißvorrichtung,
- Fig. 6: eine Darstellung der Schweißvorrichtung in einer Nicht-Schweißstellung analog Fig. 4, allerdings teilweise gebrochen,
- Fig. 7: eine Darstellung analog Fig. 6, allerdings in einer Schweißstellung der Schweißvorrichtung, und zwar zu Beginn des Schweißvorgangs,
- Fig. 8: eine Darstellung der Schweißvorrichtung analog zu Fig. 6, und zwar zu einem späteren Zeitpunkt des Schweißvorgangs,
- Fig. 9: eine Darstellung der Schweißvorrichtung analog zu Fig. 4, allerdings in einer Reinigungsstellung der Vorrichtung,
- Fig. 10: die Einzelheit X aus Fig. 3 in vergrößerter Darstellung,
- Fig. 11: einen Schnitt entlang der Schnittlinie XI-XI aus Fig. 10,
- Fig. 12: eine teilweise geschnittene Vorderansicht einer zweiten Alternative einer erfindungsgemäßen Ultraschallschweißvorrichtung.

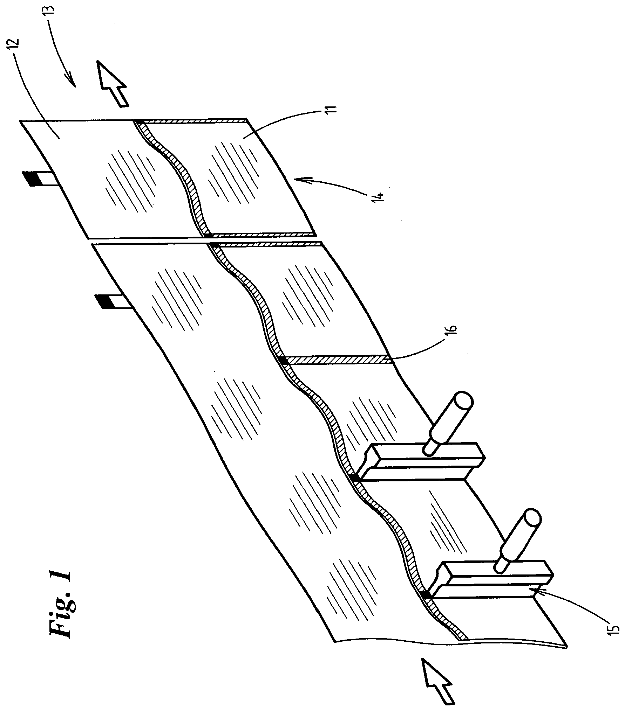

Mit einer erfindungsgemäßen Vorrichtung zum Ultraschallschweißen lassen sich diverse Materialien miteinander verschweißen. So beispielsweise Abschnitte 11 und 12 einer Folienbahn 13 zur Herstellung von Tabakbeuteln 14, vgl. Fig. 1. Dort ist skizzenhaft angedeutet, dass Ultraschallsonotroden 15 Quernähte 16 für solche Tabakbeutel 14 schweißen. Auf die Einzelheiten einer solchen Herstellung von Tabakbeuteln kommt es vorliegend allerdings nicht an.

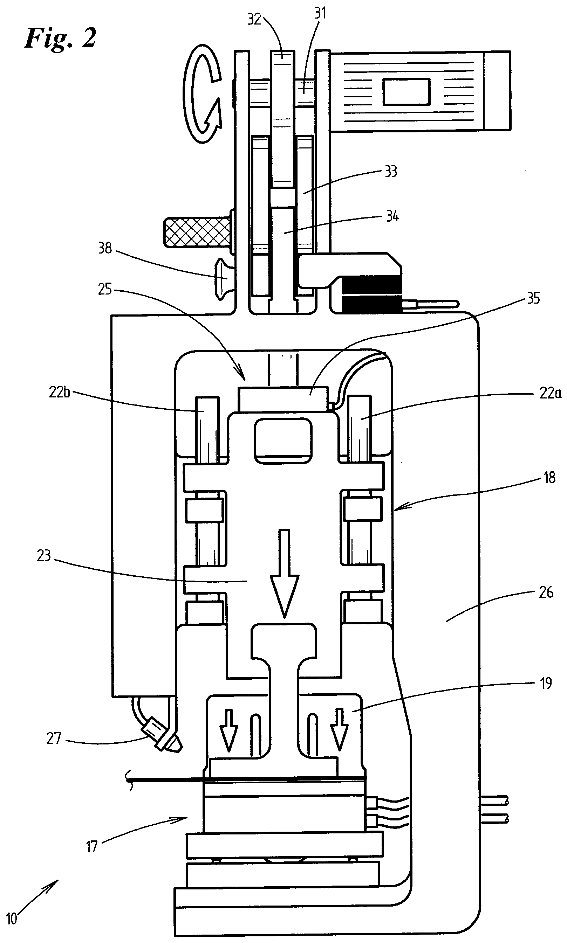

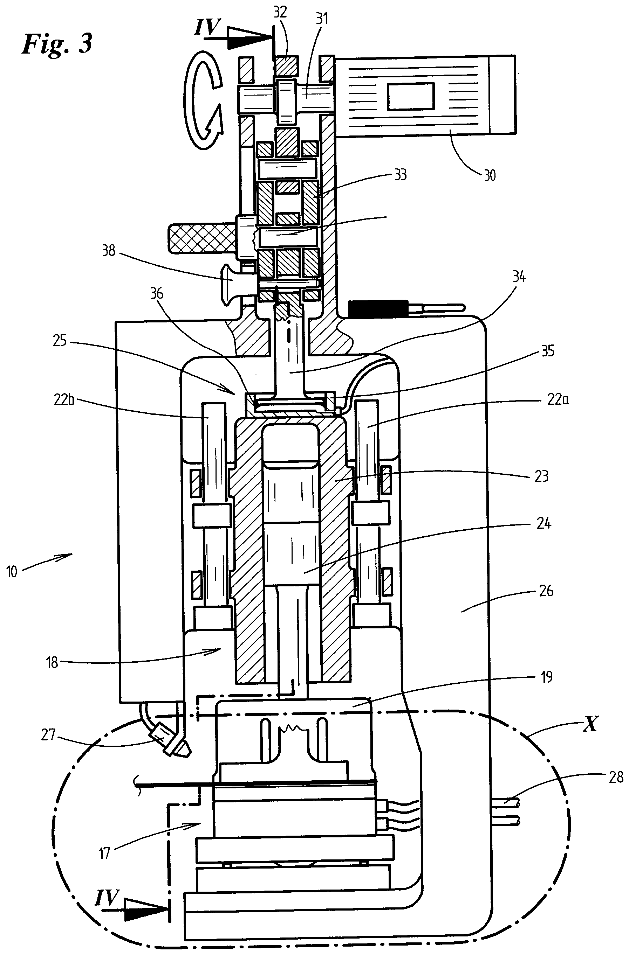

Wichtig sind vielmehr der Aufbau und die Funktionsweise der in den Fig. 2-12 gezeigten Alternativen von Ultraschallschweißvorrichtungen 10 bzw. 10', mit der solche und andere Schweißvorgänge durchgeführt werden können.

Die erste Alternative 10 der erfindungsgemäßen Schweißvorrichtung, vgl. Fig. 2-11, verfügt über eine als Ganzes in Richtung eines Gegenorgans 17 bzw. Gegenwerkzeugs, beispielsweise eines Ambosses, sowie in entgegengesetzte Richtung verfahrbare Ultraschallschweißeinheit 18.

An ihrem dem Gegenorgan 17 zugekehrten Ende weist die Ultraschallschweißeinheit 18 eine in ihrer Funktionsweise und ihrem Aufbau an sich bekannte Ultraschallsonotrode 19 auf, die bei Bewegung der Ultraschallschweißeinheit 18 mitbewegt wird.

Als zu verschweißende Materialien 20, 21 sind in Fig. 2 zwei neben- bzw. übereinander angeordnete Lagen von Folie gezeigt. Bei den Materialien 20, 21 kann es sich beispielsweise um die beiden Abschnitte 11, 12 der Folienbahn 13 handeln. Die beiden Materialien 20, 21 sind zwischen Ultraschallsonotrode 19 und Gegenorgan 17 angeordnet. Während jedes Schweißvorgangs ist das Material 21 dabei dem Gegenorgan 17 zugewandt und liegt an diesem an, das Material 20 dagegen ist der Ultraschallsonotrode 19 zugewandt und liegt an dieser an.

Die Ultraschallschweißeinheit 18 verfügt des Weiteren über einen an Längsführungen 22a, 22b gelagerten Schlitten 23, an dem unter anderem die Ultraschallsonotrode 19 und ein die Ultraschallsonotrode 19 speisender Ultraschallkonverter 24 befestigt bzw. gelagert sind. Weiter ist daran ein Spannorgan 25 angeordnet, auf das nachfolgend noch näher eingegangen wird.

Die Ultraschallschweißeinheit 18 ist mittels des Schlittens 23 relativ zu einem ortsfesten Tragteil 26 verfahrbar, vorliegend einem Rahmen oder Gestell, an dem die Längsführungen 22a, 22b befestigt bzw. gelagert sind.

An dem Tragteil 26 ist weiter eine Kühlluftdüse 27 befestigt, die zur Verhinderung übermäßiger Erwärmung der Ultraschallsonotrode 19 im Betrieb der Vorrichtung 10 der Sono-trode 19 kalte Luft zuführt.

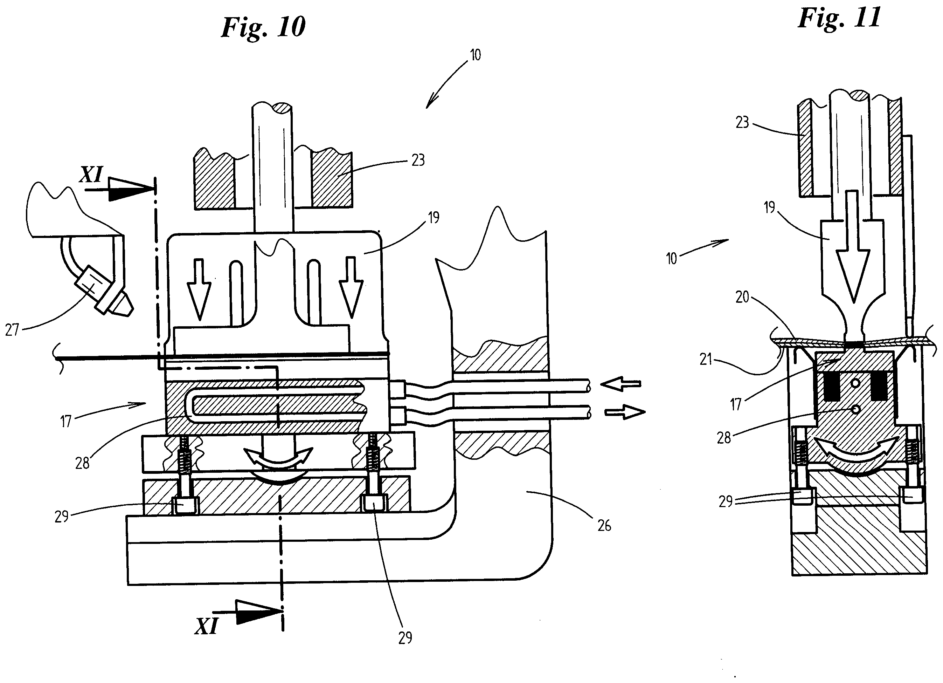

Wie insbesondere in Fig. 10 erkennbar ist, sind in das Gegenorgan 17 Kühlmittelleitungen 28 integriert, über die dem Gegenorgan 17 im Betrieb der Vorrichtung 10 Kühlmittel zugeführt wird, um ein übermäßiges Erhitzen des Gegenorgans 17 zu verhindern. Als Kühlmittel kann beispielsweise Wasser verwendet werden.

Ebenfalls in Fig. 10 erkennbar sind Justiermittel 29, vorliegend Schrauben, mit denen die räumliche Stellung des Gegenorgans 17 relativ zu der Ultraschallsonotrode 19 angepasst werden kann bzw. mit denen die Ultraschallsonotrode 19 ausgerichtet werden kann.

Das Verfahren der Ultraschallschweißeinheit 18 relativ zu dem Tragteil 26 bzw. zu dem Gegenorgan 17 und den zu verschweißenden Materialien 20, 21 erfolgt mittels eines elektrischen Antriebsmotors 30, vorliegend eines Servomotors.

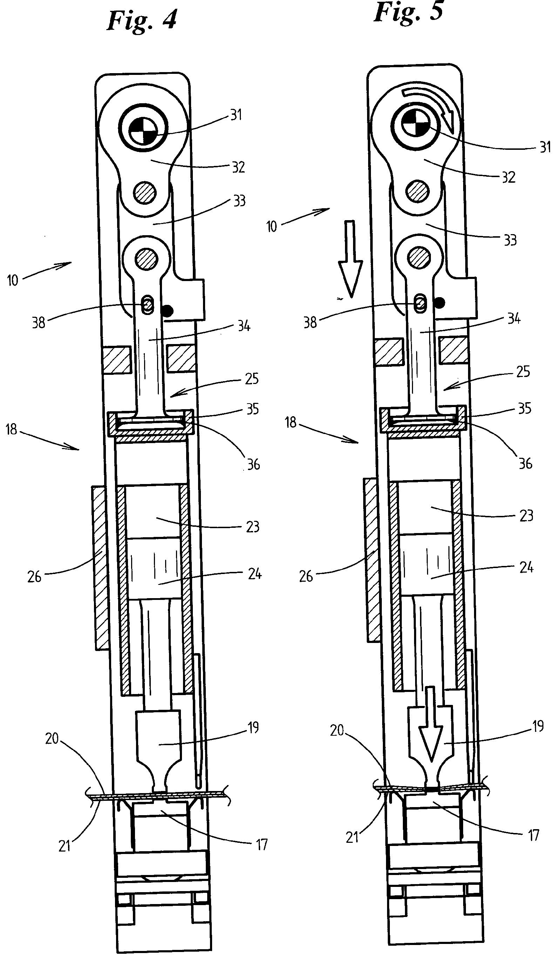

Dieser treibt gezielt eine Kurbelwelle 31 an, auf der ein Pleuel 32 gelagert ist. Der Pleuel 32 ist mit der Ultraschallschweißeinheit 18 wirkverbunden, sodass eine Bewegung der Kurbelwelle 31 in eine erste Richtung, vgl. Fig. 5, eine (nach unten gerichtete) Bewegung der Ultraschallschweißeinheit 18 in Richtung des Gegenorgans 17 bewirkt, das heißt auf das Gegenorgan 17 zu.

Eine entgegengesetzte Drehbewegung der Kurbelwelle 31 bewirkt entsprechend eine (nach oben gerichtete) Bewegung der Ultraschallschweißeinheit 18 in die entgegengesetzte Richtung, das heißt von dem Gegenorgan 17 weg.

Die Ultraschallschweißeinheit 18 kann unabhängig von den Vibrationen bzw. Ultraschallbewegungen der Ultraschallsonotrode 19 von einer Nicht-Schweißstellung, vgl. beispielsweise Fig. 4, in der die Ultraschallsonotrode 19 keine Vibrationen bzw. Schwingungen auf die Materialien 20, 21 überträgt, in eine Schweißstellung bewegt werden, vgl. beispielsweise Fig. 5, in der dies dann der Fall ist.

Im vorliegenden Ausführungsbeispiel ist der Pleuel 32 mit der Ultraschallschweißeinheit 18 verbunden über ein Zwischenstück 18, das einerseits gelenkig mit dem Pleuel 32 verbunden ist, andererseits gelenkig mit dem Spannorgan 25.

Das Spannorgan 25 umfasst vorliegend ein (stangenartiges) Hubelement 34 bzw. einen Stempel, das innerhalb eines vorliegend (hohl-)zylindrischen Gehäuses 35 verschiebbar bzw. relativ zu diesem bewegbar gelagert ist.

Das Spannorgan 25 ist letztlich Teil der Ultraschallschweißeinheit 18.

Das Gehäuse 35 desselben ist dabei fest an dem Schlitten 23 angeordnet bzw. an diesem befestigt. Das Hubelement 34, das innerhalb des Gehäuses 35 bewegbar ist, ist an seinem von dem Gehäuse 35 abgekehrten Ende - wie oben bereits angedeutet - mittelbar mit dem Antriebsmotor 30 verbunden (über das Zwischenstück 33, den Pleuel 32 und die Kurbelwelle 31). An seinem anderen Ende stützt es sich auf einer innerhalb des Gehäuses 35 angeordneten Membran 36 ab.

Das Spannorgan 25 hat die Aufgabe, in der Schweißstellung der Ultraschallschweißeinheit 18 bei einem Nachgeben eines der zu verschweißenden Materialien 20, 21 oder beider Materialen, insbesondere wenn diese durch den Energieeintrag während des Schweißvorgangs in Folge von Plastizierungsvorgängen dünner werden, dieses Nachgeben auszugleichen bzw. diesem entgegenzuwirken.

Zu diesem Zweck verlängert sich das Spannorgan 25 in der Schweißstellung bei einem Nachgeben der Materialien 20, 21 in Längsrichtung, was im Ergebnis zu einem Verfahren der Ultraschallschweißeinheit 18 und mithin auch der Ultraschallsonotrode 19 in Richtung der nachgebenden Materialien 20, 21 führt.

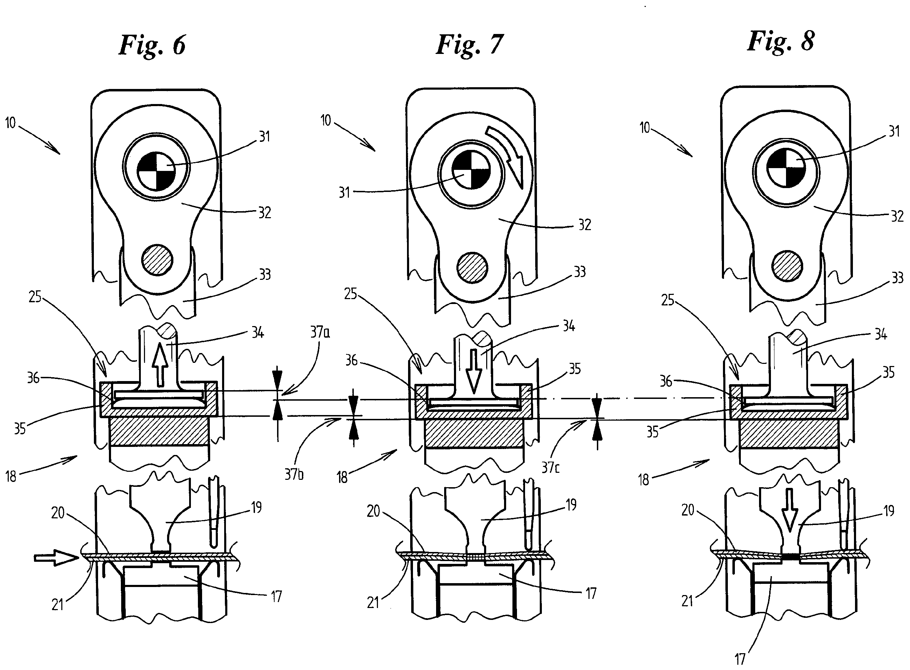

Die Zusammenhänge werden im Detail nachfolgend anhand der Fig. 6-8 erläutert:

Das Spannmodul 25 ist vorliegend als Pneumatikspannmodul ausgebildet.

In der in Fig. 6 gezeigten Nicht-Schweißstellung der Schweißvorrichtung 10 bzw. der Ultraschallschweißeinheit 18 ist das Spannmodul 25 gezielt mittels Druckluft aus einem nicht dargestellten, Steuer- bzw. regelbaren Druckluftspeicher in die in Fig. 6 gezeigte Stellung vorgespannt. Dabei ist die Membran 36 des Spannmoduls 25 mit der Druckluft derart beaufschlagt, dass sich deren in Fig. 6 gezeigte Wölbung sowie entsprechend der Hub 37a bzw. die dargestellte Position des sich an der Membran 36 anliegenden Hubelements 34 einstellt. In dieser Nicht-Schweißstellung weist das Spannmodul 25 eine im vorliegenden Fall erste, größere (maximale) Längsausdehnung bzw. Längsabmessung auf (vorliegend definiert durch den Abstand des dem Pleuel 32 zugekehrten Endes des Hubelements 34 einerseits und dem dem Schlitten 35 zugekehrten Ende des Gehäuses 35 andererseits).

In Fig. 7 ist die Vorrichtung 10 unmittelbar nach Heranfahren (Absenken) der Ultraschallschweißeinheit 18 in Richtung des Gegenorgans 17 und unmittelbar nach Beginn des Schweißvorgangs gezeigt, also insbesondere nach Überführung der Ultraschallschweißeinheit 18 in eine bzw. die Schweißstellung, in der mit der Ultraschallsonotrode 19 Ultraschall in die Materialien 20, 21 eingeleitet wird. Das Überführen der Ultraschallschweißeinheit 18 in die Schweißstellung bewirkt dabei ein Abstützen der Sonotrode 19 an dem Gegenorgan 17 (über die Materialien 20, 21) und in der Folge eine entsprechende Gegenkraft des Gegenorgans 17 in Richtung des Spannorgans 25. Die einzelnen Bauteile der Vorrichtung 10 sind derart aufeinander abgestimmt, dass durch diese Gegenkraft das Spannorgan 25 gegen entgegengesetzte, durch die Druckluft des Spannorgans 25 aufgebrachte Spannkräfte komprimiert bzw. in seiner Länge verkürzt wird. Konkret wird das Gehäuse 35 (in Längsrichtung) des Spannorgans 25 relativ zu dem Hubelement 34 bewegt, wodurch die Membran 36 zusammengedrückt wird. Der sich am Ende dieses Prozesses einstellende Stempelhub 37b ist gegenüber dem Stempelhub 37a aus Fig. 6 kleiner.

In Fig. 8 ist nun ein späterer Zustand gezeigt, in dem bereits eine gewisse Zeit Schweißenergie in die Materialien 20, 21 eingeleitet wurde. Im Zuge des Schweißvorgangs haben die Materialien 20, 21 nachgegeben, d.h., vorliegend hat sich deren Dicke reduziert. Das Spannorgan 25 hat dieses Nachgeben - mittels seiner Spannkräfte - durch Expansion bzw. Vergrößerung seiner Länge kompensiert. Konkret hat sich das Gehäuse 35 relativ zu dem Hubelement 34 um eine Strecke 37c in Richtung des Gegenorgans 17 bewegt (bzw. nach unten). Entsprechend bewegt sich auch die Ultraschallschweißeinheit 18 und mit ihr die Ultraschallsonotrode 19 in Richtung des Gegenorgans 17.

Während der in den Fig. 6-8 gezeigten Bewegungen wird der Luftdruck des Spannorgans 25, das heißt der auf die Membran 36 wirkende Luftdruck, bevorzugt konstant gehalten, indem der Druckluftspeicher entsprechend gesteuert bzw. geregelt wird. Dies bewirkt vorteilhafterweise, dass der Schweißdruck, den die Ultraschallsonotrode 19 während des Schweißens auf die Materialien 20, 21 ausübt (zusammen mit dem Gegenorgan 19) während des gesamten Schweißvorgangs konstant gehalten wird. Entsprechende Druckregelungen, mit denen so etwas möglich ist, sind im Stand der Technik gut bekannt. Beispiele nach Maßgabe von Signalen eines Schweißdrucksensors, der den aktuellen Schweißdruck misst. Oder nach Maßgabe von hinterlegten, von der Bewegung der Ultraschallschweißeinheit abhängigen Steuerkurven. Hier sind viele Varianten denkbar.

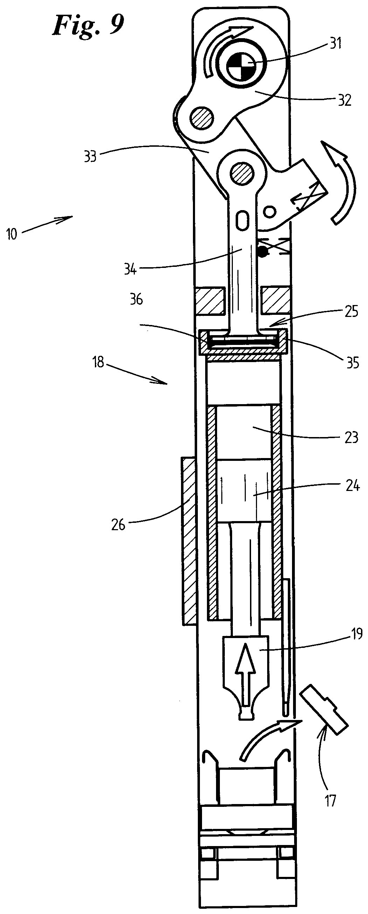

Gemäß einer weiteren Besonderheit der Vorrichtung 10 ist im Übrigen noch vorgesehen, diese außerhalb des Standardbetriebs in eine Reinigungsstellung überführen zu können, vgl. Fig. 9, innerhalb derer Teile der Vorrichtung 10 zur Reinigung leicht entnommen werden können bzw. demontiert werden können.

Zu diesem Zweck ist zwischen dem Antriebsmotor 30 und der Ultraschallschweißeinheit 18 ein Knickgelenk angeordnet ist, das aus einer nicht abgewinkelten Betriebsstellung, in der das Knickgelenk Bewegungsenergie des Antriebsmotors 30 zum Verfahren der Ultraschallschweißeinheit 18 auf diese übertragen kann, in eine abgewinkelte Reinigungsstellung überführbar ist, in der die Ultraschallschweißeinheit 18 aufgrund der abgewinkelten Stellung des Knickgelenks einen größeren Abstand von dem Gegenorgan 17 aufweist als in der Betriebsstellung.

Ein erster Arm des Knickgelenks wird dabei durch das Zwischenstück 33 gebildet, ein zweiter Arm durch den an dem Zwischenstück 33 drehbar angelenkten Pleuel 32.

Das Knickgelenk kann aus der in den Fig. 2-8 gezeigten Stellung, in der nicht angewinkelt ist bzw. in der beide Arme desselben fluchten und in Längsrichtung der Vorrichtung 10 ausgerichtet sind, in eine angewinkelte Reinigungsstellung verschwenkt werden.

Hierzu kann von einem Bediener ein Arretierstift 38 gelöst werden, der im Betrieb der Vorrichtung 10 ein Verschwenken des Knickhebels und insbesondere des Zwischenstücks 33 relativ zu dem Pleuel 32 bzw. dem Hubelement 34 verhindert. Im Anschluss können die beiden Arme des Knickhebels händisch in die in Fig. 9 gezeigte, angewinkelte Stellung verschwenkt werden.

Hierdurch werden die Ultraschallschweißeinheit 18 bzw. der Schlitten 23 von dem Gegenorgan 17 weg (nach oben) in die Reinigungsstellung bewegt, in der das Gegenorgan 17 zugänglich ist und der es möglich ist, das Gegenorgan 17 zu entfernen.

Das Gegenorgan 17 ist zu diesem Zweck mehrteilig ausgebildet. So könnte der obere, in Fig. 9 gezeigte Teil desselben etwa über Magnete an einem unteren Basisteil angeordnet sein, und entsprechend in einfacher Weise gelöst werden, vgl. Fig. 9 und 11.

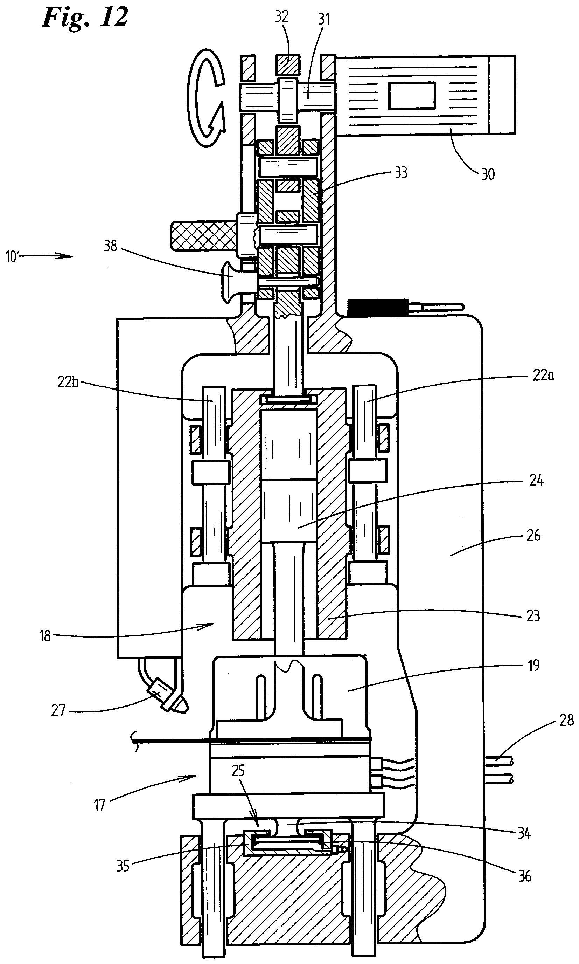

Fig. 12 schließlich zeigt die Alternative 10' einer erfindungsgemäßen Schweißvorrichtung. Funktional gleiche Bauteile sind mit denselben Bezugsziffern wie in den Fig. 2-11 gekennzeichnet.

Im Unterschied zu der Vorrichtung 10 ist bei der Vorrichtung 10' das Spannorgan 25 allerdings nicht der Ultraschallschweißeinheit 18 zugeordnet bzw. an dieser angeordnet. Das Spannorgan 25 ist vielmehr dem Gegenorgan 17 zugeordnet. Entsprechend wird bei einem Nachgeben der Materialien 20, 21 durch eine entsprechende Verlängerung des Spannorgans 25 nicht die Ultraschallschweißeinheit 18 bewegt, sondern das Gegenorgan 17, und zwar (nach oben) in Richtung der Ultraschallsonotrode 19. Zu diesem Zweck ist das Gegenorgan 17 in der in Fig. 12 gezeigten Weise mittels entsprechender Längsführungen 22a, 22b beweglich an dem Tragteil 26 gelagert.

**Bezugszeichenliste:**

| | | | |
|---|---|---|---|
| 10 | Ultraschallschweißvorrichtung | 34 | Hubelement |
| 10' | Vorrichtung | 35 | Gehäuse |
| 11 | Abschnitt | 36 | Membran |
| 12 | Abschnitt | 37a | Hub |
| 13 | Folienbahn | 37b | Hub |
| 14 | Tabakbeutel | 37c | Strecke |
| 15 | Ultraschallsonotrode | 38 | Arretierstift |
| 16 | Quernähte | | |
| 17 | Gegenorgan | | |
| 18 | Ultraschallschweißeinheit | | |
| 19 | Ultraschallsonotrode | | |
| 20 | Material | | |
| 21 | Material | | |
| 22a | Längsführung | | |
| 22b | Längsführung | | |
| 23 | Schlitten | | |
| 24 | Ultraschalkonverter | | |
| 25 | Spannorgan | | |
| 26 | Tragteil | | |
| 27 | Kühlluftdüse | | |
| 28 | Kühlmittelleitungen | | |
| 29 | Justiermittel | | |
| 30 | Antriebsmotor | | |
| 31 | Kurbelwelle | | |
| 32 | Pleuel | | |
| 33 | Zwischenstück | | |

## Patentansprüche

1. Vorrichtung zum Ultraschallschweißen von Materialien (20, 21), insbesondere Folien, mit einer eine Ultraschallsonotrode (19) aufweisenden Ultraschallschweißeinheit (18), mit einem elektrischen Antriebsmotor (30) zum Verfahren der Ultraschallschweißeinheit (18) unabhängig von der Ultraschallschweißbewegung der Ultraschallsonotrode (19), mit einem in einer Schweißstellung der Ultraschallschweißeinheit (18) gegenüber einer Nicht-Schweißstellung gegen den Widerstand von entgegengerichteten Spannkräften in seiner Länge verringerten Spannorgan (25), das sich in der Schweißstellung bei einem Nachgeben wenigstens eines der zu verschweißenden Materialien während des Schweißvorgangs aufgrund seiner Spannkräfte in seiner Länge vergrößert und durch die Längenvergrößerung eine Bewegung der Ultraschallschweißeinheit (18) in Richtung des nachgebenden Materials bewirkt, wobei das Spannorgan (25) pneumatisch betrieben ist, wobei das Spannorgan (25) ein Gehäuse (35) aufweist und ein innerhalb des Gehäuses (35) relativ zu diesem durch Druckluft bewegbares Hubelement (34), und wobei das Spannorgan (25) an eine Druckluftquelle angeschlossen ist, **dadurch gekennzeichnet, dass** die Druckluftquelle derart gesteuert oder geregelt ist, dass in der Schweißstellung der Ultraschallschweißeinheit (18) der auf das Hubelement (34) wirkende Luftdruck vor dem Nachgeben des Materials (20, 21) und nach dem Nachgeben des Materials (20, 21) gleich oder im Wesentlichen gleich ist.

2. Vorrichtung zum Ultraschallschweißen von Materialien (20, 21), insbesondere Folien, mit einer eine Ultraschallsonotrode (19) aufweisenden Ultraschallschweißeinheit (18), mit einem elektrischen Antriebsmotor (30) zum Verfahren der Ultraschallschweißeinheit (18) unabhängig von der Ultraschallschweißbewegung der Ultraschallsonotrode (19) in Richtung eines Gegenorgans (17), zwischen dem und der Ultraschallsonotrode (19) die zu verschweißenden Materialien (20, 21) während des Schweißvorgangs angeordnet sind, und mit einem in einer Schweißstellung der Ultraschallschweißeinheit (18) gegenüber einer Nicht-Schweißstellung gegen den Widerstand von entgegengerichteten Spannkräften in seiner Länge verringerten, pneumatisch betriebenen Spannorgan (25), das sich in der Schweißstellung bei einem Nachgeben wenigstens eines der zu verschweißenden Materialien (20, 21) während des Schweißvorgangs aufgrund seiner Spannkräfte in seiner Länge vergrößert und durch die Längenvergrößerung eine Bewegung des Gegenorgans (17) in Richtung der Ultraschallsonotrode (19) bewirkt, wobei das Spannorgan (25) derart betrieben werden kann, dass die Spannkraft pro Wegstrecke, die das Spannorgan (25) in der Schweißstellung einer Verringerung seiner Länge entgegensetzt oder entgegensetzen würde, vor der Vergrößerung seiner Länge bei Nachgeben des Materials (20, 21) dieselbe ist oder im Wesentlichen dieselbe ist wie nach der Vergrößerung seiner Länge, wobei das Spannorgan (25) ein Gehäuse (35) aufweist und ein innerhalb des Gehäuses (35) relativ zu diesem durch Druckluft bewegbares Hubelement (34), und wobei das Spannorgan (25) an eine Druckluftquelle angeschlossen ist, **dadurch gekennzeichnet, dass** die Druckluftquelle derart gesteuert oder geregelt ist, dass in der Schweißstellung der Ultraschallschweißeinheit (18) der auf das Hubelement (34) wirkende Luftdruck vor dem Nachgeben des Materials (20, 21) und nach dem Nachgeben des Materials (20, 21) gleich oder im Wesentlichen gleich ist.

3. Vorrichtung gemäß Anspruch 1 oder 2, **dadurch gekennzeichnet, dass** das Spannorgan (25) bei Verfahren der Ultraschallschweißeinheit (18) von der Nicht-Schweißstellung in die Schweißstellung durch die Gegenkraft eines Gegenorgans (17), zwischen dem und der Ultraschallsonotrode die zu verschweißenden Materialien (20, 21) während des Schweißvorgangs angeordnet sind, von dem Zustand, in dem es eine größere Länge aufweist, in den Zustand überführt bzw. komprimiert wird, in dem es eine kleinere Länge aufweist.

4. Vorrichtung gemäß Anspruch 1 oder 3, **dadurch gekennzeichnet, dass** das Spannorgan (25) Teil der mit dem Antriebsmotor (30) verfahrbaren Ultraschallschweißeinheit (18) ist.

5. Vorrichtung gemäß einem oder mehreren der vorhergehenden Ansprüche, **dadurch gekennzeichnet, dass** das Spannorgan (25) einen ersten Bereich oder erstes Bauteil (34) aufweist sowie einen zweiten Bereich oder ein zweites Bauteil (35), die zur Längenänderung insbesondere in Längsrichtung der Vorrichtung (10, 10') relativ zueinander bewegbar sind.

6. Vorrichtung gemäß Anspruch 5, **dadurch gekennzeichnet, dass** das erste Bauteil (34) oder der erste Bereich mittelbar oder unmittelbar (fest) mit dem Antriebsmotor (30) verbunden ist, und das zweite Bauteil (35) oder der zweite Bereich mittelbar oder unmittelbar (fest) mit der Ultraschallsonotrode (19).

7. Vorrichtung gemäß den Ansprüchen 5 oder 6, **dadurch gekennzeichnet, dass** der erste Bereich oder das erste Bauteil (34) in dem Zustand des Spannorgans (25), in dem es eine größere Länge aufweist, einen größeren (Längs-)Abstand von dem zweiten Bereich oder dem zweiten Bauteil (35) aufweist als in dem Zustand, in dem es eine kleinere Länge aufweist.

8. Vorrichtung gemäß einem oder mehreren der vorhergehenden Ansprüche, **dadurch gekennzeichnet, dass** die Vorrichtung (10, 10') eine von dem Antriebsmotor (30) angetriebene, mit der Ultraschallschweißeinheit (18) verbundene Kurbelwelle (31) aufweist, die Drehbewegungen in Translationsbewegungen zum Verfahren der Ultraschallschweißeinheit (18) in die Schweißstellung bzw. aus der Schweißstellung in die Nicht-Schweißstellung übersetzt.

9. Vorrichtung gemäß einem oder mehreren der vorhergehenden Ansprüche, **dadurch gekennzeichnet, dass** die Ultraschallschweißeinheit (18) während ihrer Verfahrbewegung geführt ist, insbesondere durch ein oder mehrere Führungen (22a, 22b).

10. Vorrichtung gemäß einem oder mehreren der vorhergehenden Ansprüche, **dadurch gekennzeichnet, dass** das Spannorgan (25) zusammen mit der Ultraschallsonotrode (19) und einem Ultraschallkonverter (24) an einem Schlitten (23) der Ultraschallschweißeinheit (18) angeordnet ist, der beim Verfahren der Ultraschallschweißeinheit (18) gemeinsam mit den vorgenannten Bauteilen von der Nicht-Schweißstellung in die Schweißstellung bewegt wird.

11. Vorrichtung gemäß Anspruch 8, **dadurch gekennzeichnet, dass** der von dem Gehäuse (35) entfernte Endbereich des Hubelements (34) mittelbar oder unmittelbar mit einem mit der Kurbellwelle (31) zugeordneten Pleuel (32) verbunden ist.

12. Vorrichtung gemäß einem oder mehreren der vorhergehenden Ansprüche, **dadurch gekennzeichnet, dass** zwischen Antriebsmotor (30) und Ultraschallschweißeinheit (18) ein Knickgelenk angeordnet ist, das aus einer nicht abgewinkelten Betriebsstellung, in der das Knickgelenk Bewegungsenergie des Antriebsmotors (30) zum Verfahren der Ultraschallschweißeinheit (18) auf diese übertragen kann, in eine abgewinkelte Reinigungsstellung überführbar ist, in der die Ultraschallschweißeinheit (18) aufgrund der abgewinkelten Stellung des Knickgelenks einen größeren Abstand von dem Gegenorgan (17) aufweist als in der Betriebsstellung.

13. Vorrichtung gemäß Anspruch 8 und 12, **dadurch gekennzeichnet, dass** ein erster Arm des Knickgelenks durch den Pleuel (32) gebildet ist und ein zweiter Arm durch ein drehbar an dem Hubelement (34) angelenktes Zwischenstück (33).

## Claims

1. Device for the ultrasonic welding of materials (20, 21), in particular films, having an ultrasonic welding unit (18) which has an ultrasonic sonotrode (19), having an electric drive motor (30) for moving the ultrasonic welding unit (18) independently of the ultrasonic welding movement of the ultrasonic sonotrode (19), and having a clamping member (25) which, in a welding position of the ultrasonic welding unit (18), is reduced in its length with respect to a non-welding position against the resistance of oppositely directed clamping forces and which is increased in its length in the welding position during a yielding of at least one of the materials to be welded during the welding operation on account of its clamping forces and, as a result of the increase in length, causes a movement of the ultrasonic welding unit (18) in the direction of the yielding material, wherein the clamping member (25) is pneumatically operated, wherein the clamping member (25) has a housing (35) and a reciprocating element (34) which is movable within the housing (35) relative to the latter by means of compressed air, and wherein the clamping member (25) is connected to a compressed-air source, **characterized in that** the compressed-air source is controlled or regulated in such a way that, in the welding position of the ultrasonic welding unit (18), the air pressure acting on the reciprocating element (34) is identical or substantially identical before the yielding of the material (20, 21) and after the yielding of the material (20, 21).

2. Device for the ultrasonic welding of materials (20, 21), in particular films, having an ultrasonic welding unit (18) which has an ultrasonic sonotrode (19), having an electric drive motor (30) for moving the ultrasonic welding unit (18) independently of the ultrasonic welding movement of the ultrasonic sonotrode (19) in the direction of a counter-member (17) between which and the ultrasonic sonotrode (19) the materials (20, 21) to be welded are arranged during the welding operation, and having a pneumatically operated clamping member (25) which, in a welding position of the ultrasonic welding unit (18), is reduced in its length with respect to a non-welding position against the resistance of oppositely directed clamping forces and which is increased in its length in the welding position during a yielding of at least one of the materials (20, 21) to be welded during the welding operation on account of its clamping forces and, as a result of the increase in length, causes a movement of the counter-member (17) in the direction of the ultrasonic sonotrode (19), wherein the clamping member (25) can be operated in such a way that the clamping force per distance which the clamping member (25) in the welding position counters or would counter to a reduction in its length is the same before the increase in its length during yielding of the material (20, 21) or substantially the same as after the increase in its length, wherein the clamping member (25) has a housing (35) and a reciprocating element (34) which is movable within the housing (35) relative to the latter by means of compressed air, and wherein the clamping member (25) is connected to a compressed-air source, **characterized in that** the compressed-air source is controlled or regulated in such a way that, in the welding position of the ultrasonic welding unit (18), the air pressure acting on the reciprocating element (34) is identical or substantially identical before the yielding of the material (20, 21) and after the yielding of the material (20, 21).

3. Device according to Claim 1 or 2, **characterized in that**, during movement of the ultrasonic welding unit (18) from the non-welding position into the welding position, the clamping member (25) is converted or compressed from the state in which it has a larger length into the state in which it has a smaller length by the counter-force of a counter-member (17) between which and the ultrasonic somatrode the materials (20, 21) to be welded are arranged during the welding operation.

4. Device according to Claim 1 or 3, **characterized in that** the clamping member (25) is part of the ultrasonic welding unit (18) which can be moved by the drive motor (30).

5. Device according to one or more of the preceding claims, **characterized in that** the clamping member (25) has a first region or first component (34) and a second region or a second component (35) which, for a change in length, in particular in the longitudinal direction of the device (10, 10'), are movable relative to one another.

6. Device according to Claim 5, **characterized in that** the first component (34) or the first region is connected indirectly or directly (fixedly) to the drive motor (30), and the second component (35) or the second region is connected indirectly or directly (fixedly) to the ultrasonic somatrode (19).

7. Device according to Claims 5 or 6, **characterized in that** the first region or the first component (34) has a larger (longitudinal) distance from the second region or the second component (35) in the state of the clamping member (25) in which it has a larger length than in the state in which it has a smaller length.

8. Device according to one or more of the preceding claims, **characterized in that** the device (10, 10') has a crankshaft (31) which is driven by the drive motor (30), is connected to the ultrasonic welding unit (18) and converts rotational movements into translational movements in order to move the ultrasonic welding unit (18) into the welding position or out of the welding position into the non-welding position.

9. Device according to one or more of the preceding claims, **characterized in that** the ultrasonic welding unit (18) is guided during its travel movement, in particular by one of more guides (22a, 22b).

10. Device according to one or more of the preceding claims, **characterized in that** the clamping member (25), together with the ultrasonic somatrode (19) and an ultrasonic converter (24), is arranged on a carriage (23) of the ultrasonic welding unit (18) that, during the movement of the ultrasonic welding unit (18), is moved jointly with the aforementioned components from the non-welding position into the welding position.

11. Device according to Claim 8, **characterized in that** the end region of the reciprocating element (34) that is remote from the housing (35) is connected indirectly or directly to a connecting rod (32) assigned to the crankshaft (31).

12. Device according to one or more of the preceding claims, **characterized in that** an articulated joint is arranged between the drive motor (30) and ultrasonic welding unit (18) and can be transferred from a non-angled operating position, in which the articulated joint can transmit movement energy of the drive motor (30) to the ultrasonic welding unit (18) in order to move the latter, into an angled cleaning position in which the ultrasonic welding unit (18) has a greater distance from the counter-member (17) than in the operating position on account of the angled position of the articulated joint.

13. Device according to Claim 8 and 12, **characterized in that** a first arm of the articulated joint is formed by the connecting rod (32), and a second arm is formed by an intermediate piece (34) which is rotatably articulated on the reciprocating element (34).

## Revendications

1. Dispositif de soudage par ultrasons de matériaux (20, 21), notamment de films, comprenant une unité de soudage par ultrasons (18) qui possède une sonotrode à ultrasons (19), comprenant un moteur d'entraînement électrique (30) destiné à déplacer l'unité de soudage par ultrasons (18) indépendamment du mouvement de soudage par ultrasons de la sonotrode à ultrasons (19), comprenant un organe de serrage (25), dont la longueur se réduit dans une position de soudage de l'unité de soudage par ultrasons (18) par rapport à une position de non-soudage en s'opposant à la résistance de forces de serrage orientées en sens inverse, dont la longueur augmente dans la position de soudage en raison de ses forces de serrage lors d'un relâchement d'au moins l'un des matériaux à souder pendant l'opération de soudage et qui, par l'augmentation de longueur, provoque un mouvement de l'unité de soudage par ultrasons (18) en direction du matériau qui se relâche, l'organe de serrage (25) étant à fonctionnement pneumatique, l'organe de serrage (25) possédant un boîtier (35) et un élément de levage (34) qui peut être déplacé par de l'air comprimé à l'intérieur du boîtier (35) par rapport à celui-ci, et l'organe de serrage (25) étant raccordé à une source d'air comprimé, **caractérisé en ce que** la source d'air comprimé est commandée ou régulée de telle sorte que, dans la position de soudage de l'unité de soudage par ultrasons (18), la pression d'air qui agit sur l'élément de levage (34) avant le relâchement du matériau (20, 21) et après le relâchement du matériau (20, 21) est la même ou sensiblement la même.

2. Dispositif de soudage par ultrasons de matériaux (20, 21), notamment de films, comprenant une unité de soudage par ultrasons (18) qui possède une sonotrode à ultrasons (19), comprenant un moteur d'entraînement électrique (30) destiné à déplacer l'unité de soudage par ultrasons (18) indépendamment du mouvement de soudage par ultrasons de la sonotrode à ultrasons (19) en direction d'un organe homologue (17) entre lequel et la sonotrode à ultrasons (19) sont disposés les matériaux (20, 21) à souder pendant l'opération de soudage, et comprenant un organe de serrage (25) à fonctionnement pneumatique, dont la longueur se réduit dans une position de soudage de l'unité de soudage par ultrasons (18) par rapport à une position de non-soudage en s'opposant à la résistance de forces de serrage orientées en sens inverse, dont la longueur augmente dans la position de soudage en raison de ses forces de serrage lors d'un relâchement d'au moins l'un des matériaux (20, 21) à souder pendant l'opération de soudage et qui, par l'augmentation de longueur, provoque un mouvement de l'organe homologue (17) en direction de la sonotrode à ultrasons (19), l'organe de serrage (25) pouvant fonctionner de telle sorte que la force de serrage par parcours, que l'organe de serrage (25) dans la position de soudage oppose ou opposerait à une diminution de sa longueur, est la même ou sensiblement la même avant l'augmentation de sa longueur lors du relâchement du matériau (20, 21) qu'après l'augmentation de sa longueur, l'organe de serrage (25) possédant un boîtier (35) et un élément de levage (34) qui peut être déplacé par de l'air comprimé à l'intérieur du boîtier (35) par rapport à celui-ci, et l'organe de serrage (25) étant raccordé à une source d'air comprimé, **caractérisé en ce que** la source d'air comprimé est commandée ou régulée de telle sorte que, dans la position de soudage de l'unité de soudage par ultrasons (18), la pression d'air qui agit sur l'élément de levage (34) avant le relâchement du matériau (20, 21) et après le relâchement du matériau (20, 21) est la même ou sensiblement la même.

3. Dispositif selon la revendication 1 ou 2, **caractérisé en ce que** l'organe de serrage (25), lors du déplacement de l'unité de soudage par ultrasons (18) de la position de non-soudage à la position de soudage, est transféré ou comprimé de l'état dans lequel il possède la plus grande longueur dans l'état où il possède une longueur plus petite par la force contraire d'un organe homologue (17), entre lequel organe homologue et la sonotrode à ultrasons sont disposés les matériaux (20, 21) à souder pendant l'opération de soudage.

4. Dispositif selon la revendication 1 ou 3, **caractérisé en ce que** l'organe de serrage (25) fait partie de l'unité de soudage par ultrasons (18) qui peut être déplacée avec le moteur d'entraînement (30).

5. Dispositif selon une ou plusieurs des revendications précédentes, **caractérisé en ce que** l'organe de serrage (25) possède une première zone ou un premier élément structural (34) ainsi qu'une deuxième zone ou un deuxième élément structural (35), qui peuvent être déplacés l'une par rapport à l'autre, notamment dans la direction longitudinale du dispositif (10, 10'), en vue de modifier la longueur.

6. Dispositif selon la revendication 5, **caractérisé en ce que** le premier élément structural (34) ou la première zone est relié directement ou indirectement (à demeure) au moteur d'entraînement (30) et le deuxième élément structural (35) ou la deuxième zone est relié directement ou indirectement (à demeure) à la sonotrode à ultrasons (19) .

7. Dispositif selon les revendications 5 ou 6, **caractérisé en ce que** la première zone ou le premier élément structural (34), dans l'état de l'organe de serrage (25) dans lequel il possède une longueur plus grande, présente un écart (longitudinal) de la deuxième zone ou du deuxième élément structural (35) supérieur à celui dans l'état dans lequel il possède une longueur plus petite.

8. Dispositif selon une ou plusieurs des revendications précédentes, **caractérisé en ce que** le dispositif (10, 10') possède un vilebrequin (31) entraîné par le moteur d'entraînement (30) et relié à l'unité de soudage par ultrasons (18), lequel convertit les mouvements de rotation en mouvement de translation en vue de déplacer l'unité de soudage par ultrasons (18) dans la position de soudage ou hors de la position de soudage dans la position de non-soudage.

9. Dispositif selon une ou plusieurs des revendications précédentes, **caractérisé en ce que** l'unité de soudage par ultrasons (18) est guidée pendant son mouvement de déplacement, notamment par un ou plusieurs guides (22a, 22b).

10. Dispositif selon une ou plusieurs des revendications précédentes, **caractérisé en ce que** l'organe de serrage (25) est disposé, conjointement avec la sonotrode à ultrasons (19) et un convertisseur d'ultrasons (24), sur un chariot (23) de l'unité de soudage par ultrasons (18) qui, lors du déplacement de l'unité de soudage par ultrasons (18), est déplacé en commun avec les composants mentionnés précédemment de la position de non-soudage dans la position de soudage.

11. Dispositif selon la revendication 8, **caractérisé en ce que** la zone d'extrémité de l'élément de levage (34) qui est éloignée du boîtier (35) est reliée directement ou indirectement à une bielle (32) associée au vilebrequin (31).

12. Dispositif selon une ou plusieurs des revendications précédentes, **caractérisé en ce qu'**un joint articulé est disposé entre le moteur d'entraînement (30) et l'unité de soudage par ultrasons (18), lequel peut être transféré d'une position de service non coudée, dans laquelle le joint articulé peut transmettre l'énergie motrice du moteur d'entraînement (30) à l'unité de soudage par ultrasons (18) en vue de déplacer celle-ci, à une position de nettoyage coudée, dans laquelle l'unité de soudage par ultrasons (18), du fait de la position coudée du joint articulé, présente un écart plus important par rapport à l'organe homologue (17) que dans la position de service.

13. Dispositif selon les revendications 8 et 12, **caractérisé en ce qu'**un premier bras du joint articulé est formé par la bielle (32) et un deuxième bras par une pièce intermédiaire (33) articulée avec rotation à l'élément de levage (34)
